(19)

**Europäisches Patentamt**
**European Patent Office**
**Office européen des brevets**

(11) **EP 4 636 355 A1**

(12) **EUROPEAN PATENT APPLICATION**
published in accordance with Art. 153(4) EPC

(43) Date of publication:
**22.10.2025 Bulletin 2025/43**

(21) Application number: **23903059.6**

(22) Date of filing: **15.09.2023**

(51) International Patent Classification (IPC):
*G01C 3/06* (2006.01)   *G06T 7/593* (2017.01)
*H04N 23/60* (2023.01)

(52) Cooperative Patent Classification (CPC):
**G01C 3/06; G06T 7/593; H04N 23/60**

(86) International application number:
**PCT/JP2023/033714**

(87) International publication number:
**WO 2024/127757 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 JP 2022201532**

(71) Applicant: **Astemo, Ltd.**
**Chiyoda-ku,**
**Tokyo 1000004 (JP)**

(72) Inventors:
• **KIMITA, Kazuya**
  **Tokyo 100-8280 (JP)**
• **KIDO, Hideaki**
  **Tokyo 100-8280 (JP)**
• **IRIE, Kota**
  **Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **IMAGE PROCESSING DEVICE AND IMAGE PROCESSING METHOD**

(57)   An image processing device includes an image acquisition unit that acquires a plurality of images captured by each of a plurality of cameras, a first distance estimation unit that estimates a distance to an object using the plurality of images, a second distance estimation unit that estimates a distance to the object using at least one of the plurality of images, an image-capturing-time computation unit that obtains image-capturing times of at least some pixels included in the plurality of images, a reliability computation unit that obtains reliability of the plurality of images based on a difference between image-capturing times of the pixel in the plurality of images, and a distance determination unit that determines a distance to the object by using the distance estimated by at least one of the first distance estimation unit and the second distance estimation unit and the reliability.

[FIG. 1]

## Description

Incorporation by Reference

This application claims priority to Japanese Patent Application No. 2022-201532 filed on December 16, 2022, the contents of which are incorporated herein by reference.

Technical Field

The present invention relates to an image processing device.

Background Art

With the spread of in-vehicle camera devices that are image recognition devices that recognize objects based on captured images, there is an increasing demand for various recognition functions for safe driving and automatic driving. In particular, a stereo camera device that detects an object with two cameras arranged side by side simultaneously measures visual information by an image and distance information to the object, and thus can grasp various objects (persons, cars, three-dimensional objects, road surfaces, road signs, signboard signs, and the like) around the automobile in detail, and also contributes to improvement of safety at the time of driving assistance.

The stereo camera calculates a distance from parallax that is a difference between positions of the same object captured by the left and right cameras. If the distance to the object is long, the parallax decreases, and if the distance to the object is short, the parallax increases.

In the stereo camera, it is necessary to capture images in a state where the times of the cameras are synchronized. In a case where image capturing is performed in a state where the synchronization of the cameras is shifted, that is, in a state where a time delay occurs in one of the cameras, an image of the object is captured after the movement by the time delay in one of the cameras. As a result, the projection position of the object on the image is different as compared with a case where images are captured at the same time by the two cameras, erroneous parallax is observed, and the distance to the object is erroneously estimated. For example, in a case where an image of an object beside a road is captured while a vehicle is traveling, collision avoidance may be determined using an erroneously estimated distance, and a collision accident may occur. In particular, in the camera that captures an image by the rolling shutter, the image is sequentially captured for each line of the image. Thus, a time delay occurs between the lines, and thus, the shift of the projection position of the object due to the time delay becomes remarkable.

Background art of the present technical field includes the following prior art. PTL 1 (JP 2019-62255 A) discloses a stereo image processing device including: a stereo image capturing unit that captures a plurality of images having different viewpoints; a synchronization unit that synchronizes image-capturing times when a plurality of images are captured; an image correction unit that parallelizes and outputs the plurality of images captured by the stereo image capturing unit; a parallax measurement unit that detects parallax based on the images output by the image correction unit; and an object detection unit that detects an object based on the parallax measured by the parallax measurement unit, and further including: a delay amount retention unit that retains, for each pixel, a delay time from the image-capturing time synchronized by the synchronization unit; and an object parallax correction unit that corrects the parallax of the object detected by the object detection unit based on the delay time retained by the delay amount retention unit.

Summary of Invention

Technical Problem

However, the technique disclosed in PTL 1 employs an approach of correcting a parallax error caused by a difference in image-capturing time between the left and right cameras for the same object region in a rolling shutter type stereo camera, and does not employ an approach of selecting distance measurement means having a small distance measurement error from a plurality of distance measurement means. Therefore, the background art does not intend to use an optimum distance by switching between compound eye distance measurement and single application distance measurement, and has difficulty in being applied to a configuration having three or more cameras or a configuration having a distance measurement device other than the cameras, and has low extensibility.

The present invention has been made in view of the above circumstances, and an object of the present invention is to select distance measurement means having a small distance measurement error and reduce an error in an estimated distance caused by a difference in image-capturing times of a plurality of images.

Solution to Problem

A representative example of the invention disclosed in the present application is as follows. That is, an image processing device includes an image acquisition unit that acquires a plurality of images captured by each of a plurality of cameras, a first distance estimation unit that estimates a distance to an object using the plurality of images, a second distance estimation unit that estimates the distance to the object using at least one of the plurality of images, an image-capturing-time computation unit that obtains image-capturing times of at least some pixels included in the plurality of images, a reliability computation unit that obtains reliability of the plurality of images based on a difference between image-capturing times of the pixel in the plurality of images, and a distance determination unit that determines a distance to the object by using the distance estimated by at least one of the first distance estimation unit and the second distance estimation unit and the reliability.

Advantageous Effects of Invention

According to one aspect of the present invention, it is possible to accurately estimate a distance to an object. Objects, configurations, and effects other than those described above will be clarified by the descriptions of the following embodiments.

Brief Description of Drawings

[FIG. 1] FIG. 1 is a schematic configuration diagram of an image processing device according to Embodiment **1.**
[FIG. 2] FIG. 2 is a flowchart of distance determination processing executed by the image processing device in Embodiment 1.
[FIG. 3] FIG. 3 is a schematic configuration diagram of an image processing device according to Embodiment 2.
[FIG. 4] FIG. 4 is a flowchart of distance determination processing executed by the image processing device in Embodiment 2.

Description of Embodiments

Hereinafter, embodiments of the present invention will be described with reference to the drawings.

(Embodiment 1)

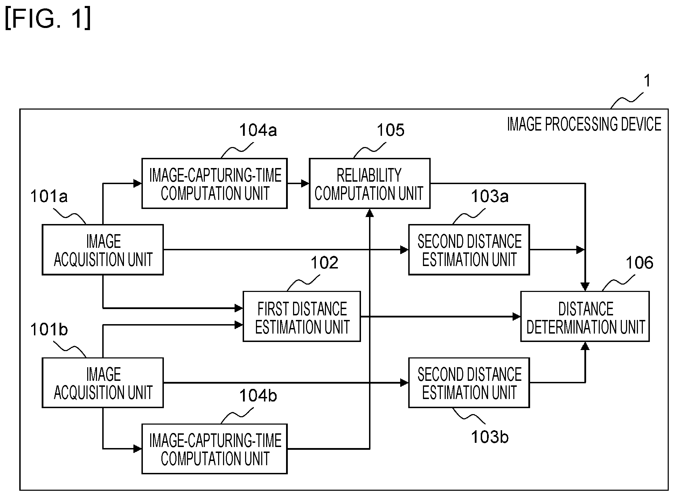

FIG. 1 is a schematic configuration diagram of an image processing device 1 according to Embodiment 1 of the present invention. An image processing device 1 illustrated in FIG. 1 is a computer that estimates a distance to an object using a camera installed in a moving body such as a vehicle. A program stored in a storage medium (not illustrated) is executed, whereby the image processing device 1 functions as image acquisition units 101a and 101b, a first distance estimation unit 102, second distance estimation units 103a and 103b, image-capturing-time computation units 104a and 104b, a reliability computation unit 105, and a distance determination unit 106. FIG. 1 illustrates an example in which the image processing device 1 includes two image acquisition units 101a and 101b, and accordingly, two second distance estimation units 103a and 103b and two image-capturing-time computation units 104a and 104b are provided.

The image acquisition unit 101a acquires an image from an in-vehicle camera or the like, and transfers the image to the first distance estimation unit 102, the second distance estimation unit 103a, and the image-capturing-time computation unit 104a. The image acquisition unit 101b acquires an image from an in-vehicle camera or the like, and transfers the image to the first distance estimation unit 102, the second distance estimation unit 103b, and the image-capturing-time computation unit 104b.

The first distance estimation unit 102 estimates a distance to an object using a set of an image that is acquired by the image acquisition unit 101a and obtained by capturing an image of the object and an image that is acquired by the image acquisition unit 101b and obtained by capturing an image of the object. Note that a known technique can be used to estimate the distance to the object using the images acquired from the plurality of image acquisition units 101a and 101b. For example, the distance can be estimated using the parallax of the same object on two images.

The second distance estimation unit 103a estimates the distance to the object using an image that is acquired from the corresponding image acquisition unit 101a and obtained by capturing an image of the object. Similarly, the second distance estimation unit 103b estimates the distance to the object using an image that is acquired from the corresponding image acquisition unit 101b and obtained by capturing an image of the object. Note that a known technique can be used to estimate the distance to the object using the image acquired from the single image acquisition unit. For example, in a monocular camera, time-series motion analysis or camera geometric analysis can be used. The second distance estimation units 103a and 103b may measure the distance to the object by a method not using an image, that is, measure the distance based on data acquired by a sensor other than the camera.

The image-capturing-time computation units 104a and 104b calculate the image-capturing time of each pixel on the image using the image-capturing start time, the exposure time, and the resolution of the image acquired from each of the image acquisition units 101a and 101b. For example, assuming that the image-capturing start time is $t_0$, the exposure time is $t_e$, and the resolution of the image is (w, h), the image-capturing time t of the pixel in coordinates (x, y) in the case of a rolling shutter type camera image can be calculated by the following expression.

[Math. 1]

$$t = t_0 + t_e \times ((y - 1) \times w + x)/(w \times h)$$

In a case where the exposure time $t_e$ is constant, the image-capturing time t is determined by the position of the pixel in the image. Thus, the image-capturing time t may be calculated only by the position of the pixel.

In addition, in the case of a global shutter type camera image, the image-capturing time t can be calculated by the following expression without depending on the coordinates of the pixel.

[Math. 2]

$$t = t_0 + t_e$$

The reliability computation unit 105 calculates the reliability of a set of pixels recognized as the same object from the difference between the image-capturing times of the pixels recognized as the same object on the plurality of images. The reliability is defined such that the smaller the difference in image-capturing time between the pixels recognized as the same object is, the larger the reliability becomes, and the reliability becomes maximum in a case where the difference is 0. For example, when image-capturing times of pixels recognized as the same object are set as $t_1$ and $t_2$, respectively, the reliability R is defined by the following expression.

[Math. 3]

$$R = k_1 e^{-\alpha_1 |t_1 - t_2|}$$

However, $k_1$ and $\alpha_1$ are positive weighting coefficients, and only need to be determined in advance from the estimation result of the image and the distance. The weighting coefficients $k_1$ and $\alpha_1$ may be predetermined values determined in advance, and may be changed depending on a traveling scene. Alternatively, in view of the fact that the larger the relative speed with respect to the object is, the larger the positional shift on the rolling shutter type camera image is, the reliability R may be defined by the following expression using the relative speed v with respect to the object.

[Math. 4]

$$R = k_2 e^{-\alpha_2 |t_1 - t_2||v|}$$

However, $k_2$ and $\alpha_2$ are positive weighting coefficients, and only need to be determined in advance from the estimation result of the image and the distance. The weighting coefficients $k_2$ and $\alpha_2$ may be predetermined values determined in advance, and may be changed depending on a traveling scene.

Furthermore, the reliability of the region where the object is reflected on the image may be calculated from the reliability of a set of associated pixels. The region where the reliability is calculated may be a region where the object is recognized, a small region obtained by dividing the image by a predetermined grid, or a region obtained by geometrically dividing the distance and the vicinity. For example, a statistical value (for example, an average value or a median value) of the reliability of pixels recognized as the same object in an object region on a plurality of images may be set as the reliability of the object region. The image to be used may be changed for each region.

Based on the reliability calculated by the reliability computation unit 105, the distance determination unit 106 selects a distance value to be finally adopted as an output from the distance estimation result by the first distance estimation unit 102 and the distance estimation results by the second distance estimation units 103a and 103b. For example, the distance estimation result by the first distance estimation unit 102 may be adopted in a case where the value of the reliability is larger than a predetermined threshold value, and the distance estimation results by the second distance estimation units 103a and 103b may be adopted in a case where the value of the reliability is smaller than the threshold value. The threshold value may be determined by the travel track record. In addition, in a case where the distance estimation results are obtained by both the two second distance estimation units 103a and 103b, a small value may be adopted, and in a case where the distance estimation results are obtained by either one of the two second distance estimation units, the obtained value may be adopted.

Alternatively, in the case of a configuration further including a third distance estimation unit that measures the distance to the object by a method not using an image, the distance estimation result by the third distance estimation unit may be adopted in a case where the reliability of distance estimation using an image is low.

For example, in a case where the image processing device 1 is mounted on an in-vehicle electronic control device, the image processing device 1 is a computer including a computation device, a storage device, and a communication interface. The computation device is a processor (for example, a microcomputer) that executes a program stored in the storage device. The computation device executes a predetermined program to operate as functional units that provide various functions of the image processing device 1. The storage device includes a nonvolatile storage region and a volatile storage region. The nonvolatile storage region includes a program region for storing a program executed by the computation device and a data region for temporarily storing data used when the computation device executes the program. The volatile storage region stores data used when the computation device executes the program. The communication interface is connected to another electronic control device via a network such as CAN or Ethernet.

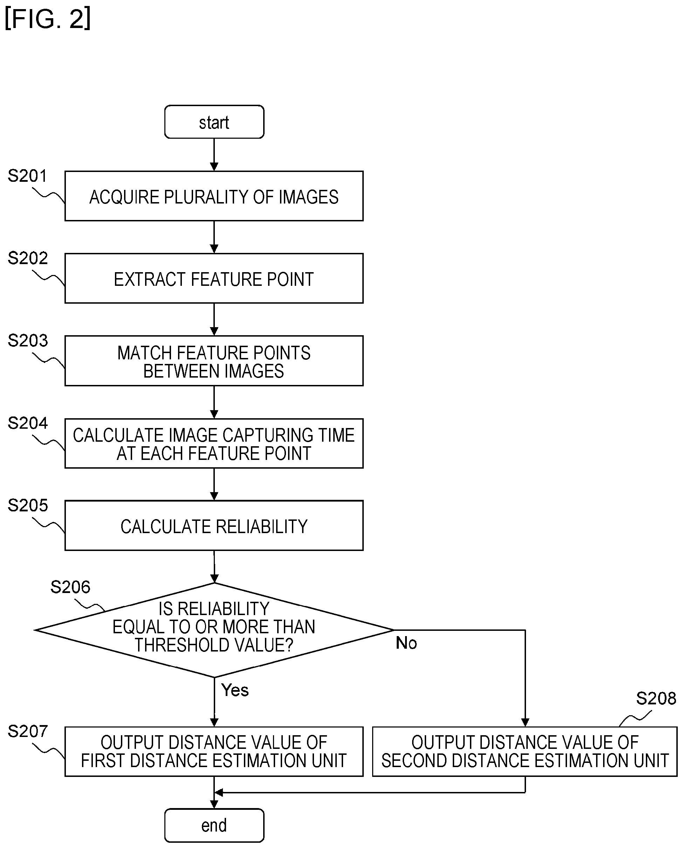

Next, a processing procedure of the image processing device 1 will be described with reference to a flowchart. FIG. 2 is a flowchart illustrating distance determination processing executed by the image processing device 1 illustrated in FIG. 1.

In a process S201, the image acquisition units 101a and 101b acquire images from an in-vehicle camera or the like.

In a process S202, the image-capturing-time computation units 104a and 104b extract feature points that are points characteristic in a change in shading from the image acquired in the process S201. A known technique can be used for the process of extracting the feature point from the image.

In a process S203, the image-capturing-time computation units 104a and 104b execute matching processing of associating a point considered to be the same point in the three-dimensional world coordinate system among the feature points extracted in the process S202 among the plurality of images.

In a process S204, the image-capturing-time computation units 104a and 104b calculate the image-capturing time of each feature point matched in the process S203.

In a process S205, the reliability computation unit 105 uses the image-capturing time of each feature point calculated in the process S204 to calculate the reliability of each set of feature points from the difference in the image-capturing time of each set of feature points matched in the process S203.

In a process S206, the distance determination unit 106 determines whether or not the reliability calculated in the process S205 is equal to or greater than a predetermined threshold value.

In a process S207, in a case where the reliability is equal to or greater than the predetermined threshold value, the distance determination unit 106 outputs the distance estimation result by the first distance estimation unit 102 as a distance value.

In a process S208, in a case where the reliability is smaller than the predetermined threshold value, the distance determination unit 106 outputs the distance estimation result by the second distance estimation unit 103a or the second distance estimation unit 103b as the distance value.

As described above, according to Embodiment 1, the distance value to be output is selected from the estimation results of the plurality of distance estimation units based on the reliability calculated from the difference between the image-capturing times in the set of associated feature points. Thus, it is possible to output a distance having a small error caused by the difference between the image-capturing times.

In addition, since it is possible to reduce the distance measurement error caused by parallax and obtain an accurate distance to a surrounding object, the timing of danger avoidance or warning in the driving assistance system becomes more accurate and the vehicle can be controlled safely.

(Embodiment 2)

Hereinafter, Embodiment 2 will be described with reference to the drawings. In Embodiment 2, the same configurations and functions as those of Embodiment 1 are denoted by the same reference signs, and the description thereof will be omitted.

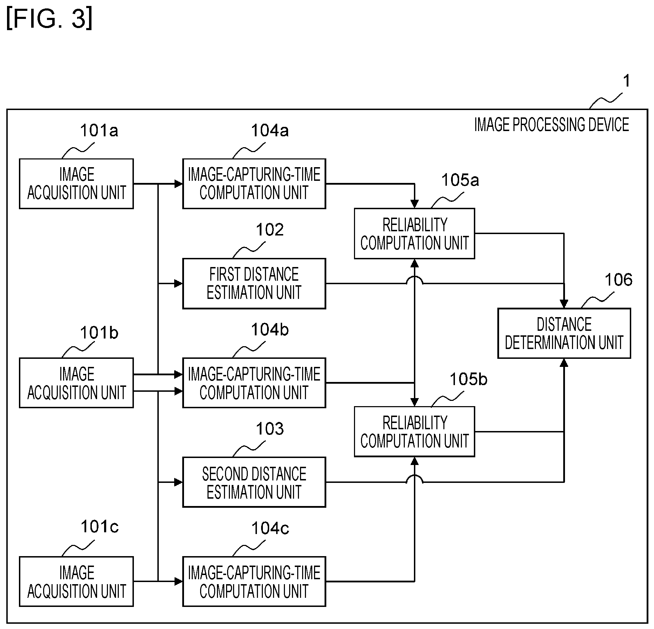

FIG. 3 is a schematic configuration diagram of an image processing device 1 according to Embodiment 2 of the present invention. As illustrated in FIG. 3, the image processing device 1 includes image acquisition units 101a, 101b, and 101c, a first distance estimation unit 102, a second distance estimation unit 103, image-capturing-time computation units 104a, 104b, and 104c, reliability computation units 105a and 105b, and a distance determination unit 106. FIG. 3 illustrates an example in which the image processing device 1 includes three image acquisition units 101a, 101b, and 101c, and accordingly, three image-capturing-time computation units and two reliability computation units are provided.

The first distance estimation unit 102 estimates a distance to an object using a set of an image that has been acquired by the image acquisition unit 101a and obtained by capturing an image of the object and an image that is acquired by the image acquisition unit 101b and obtained by capturing an image of the object. The second distance estimation unit 103 estimates a distance to an object using a set of an image that has been acquired by the image acquisition unit 101b and obtained by capturing an image of the object, and an image that has been acquired by the image acquisition unit 101c and obtained by capturing an image of the object. The first distance estimation unit 102 and the second distance estimation unit 103 only need to estimate the distance using images acquired by any two cameras, and may be a combination of any two cameras among three cameras from which the image processing device 1 of Embodiment 2 acquires images. In addition, distance measurement means that measures the distance to the object by a method not using an image, that is, uses data acquired by a sensor other than the camera may be combined with any camera.

The image-capturing-time computation units 104a to 104c calculate image-capturing times of pixels on the images acquired by the image acquisition units 101a to 101c, respectively.

The reliability computation unit 105a calculates the reliability using the image-capturing time calculated by the image-capturing-time computation unit 104a and the image-capturing time calculated by the image-capturing-time computation unit 104b. The reliability computation unit 105b calculates the reliability using the image-capturing time calculated by the image-capturing-time computation unit 104b and the image-capturing time calculated by the image-capturing-time computation unit 104c.

Based on the reliability calculated by the reliability computation unit 105a and the reliability calculated by the reliability computation unit 105b, the distance determination unit 106 adopts and outputs either one of the distance estimation result to the object by the first distance estimation unit 102 and the distance estimation result to the object by the second distance estimation unit 103.

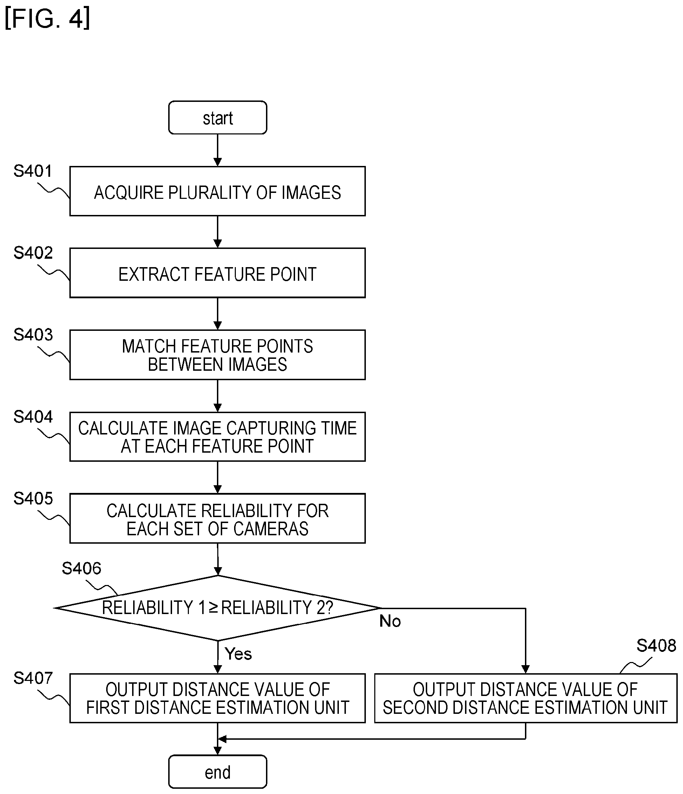

FIG. 4 is a flowchart of distance determination processing executed by the image processing device 1 in FIG. 3.

In a process S401, the image acquisition units 101a, 101b, and 101c acquire images from an in-vehicle camera or the like.

In a process S402, the image-capturing-time computation units 104a, 104b, and 104c extract feature points that are points characteristic in a change in shading from the image acquired in the process S401. A known technique can be used for the process of extracting the feature point from the image.

In a process S403, the image-capturing-time computation units 104a, 104b, and 104c execute matching processing of associating a point considered to be the same point in the three-dimensional world coordinate system among the feature points extracted in the process S402 among the plurality of images.

In a process S404, the image-capturing-time computation units 104a, 104b, and 104c calculate the image-capturing time of each feature point matched in the process S403.

In a process S405, the reliability computation units 105a and 105b use the image-capturing time of each feature point calculated in the process S404 to calculate the reliability of each set of feature points from the difference in the image-capturing time of each set of feature points matched in the process S403. Here, the reliability computation unit 105a sets the reliability calculated from the image-capturing time calculated by the image-capturing-time computation unit 104a and the image-capturing time calculated by the image-capturing-time computation unit 104b, as the reliability 1. In addition, the reliability computation unit 105b sets the reliability calculated from the image-capturing time calculated by the image-capturing-time computation unit 104b and the image-capturing time calculated by the image-capturing-time computation unit 104c as the reliability 2.

In a process S406, the distance determination unit 106 determines which of the reliability 1 and the reliability 2 calculated in the process S405 is larger.

In a process S407, in a case where the reliability 1 is equal to or higher than the reliability 2, the distance determination unit 106 outputs the distance estimation result by the first distance estimation unit 102.

In a process S408, in a case where the reliability 1 is smaller than the reliability 2, the distance determination unit 106 outputs the distance estimation result by the second distance estimation unit 103.

As described above, according to Embodiment 2, the distance value to be output is selected from the estimation results of the plurality of distance estimation units based on the reliability calculated from the difference between the image-capturing times in the set of associated feature points. Thus, it is possible to output a distance having a small error caused by the difference between the image-capturing times.

In Embodiment 2, the case where the number of image acquisition units is three has been described, but also in a case where the number of image acquisition units is four or more, similarly, the reliability of a set of pixels, regions, and the like associated between images is calculated from the image-capturing times of the pixels on the acquired image, and the distance estimated using the set of high reliability is adopted, so that it is possible to output a distance with a small

EP 4 636 355 A1

estimation error caused by the difference in the image-capturing time.

The present invention is not limited to the above-described embodiments, and includes various modifications and equivalent configurations within the spirit of the appended claims. For example, the above embodiments are described in detail in order to explain the present invention in an easy-to-understand manner, and the present invention is not necessarily limited to a case including all the described configurations. In addition, a portion of the configuration of one embodiment may be replaced with the configuration of another embodiment. Further, the configuration of one embodiment may be added to the configuration of another embodiment. Regarding some components in the embodiments, other components may be added, deleted, and replaced.

In addition, some or all of the above-described configurations, functions, processing units, processing means, and the like may be realized by hardware by, for example, designing with an integrated circuit, or may be realized by software by a processor interpreting and executing a program for realizing each function.

Information such as a program, a table, and a file, that realizes each function can be stored in a memory, a storage device such as a hard disk and a solid state drive (SSD), or a recording medium such as an IC card, an SD card, and a DVD.

Control lines and information lines considered necessary for the descriptions are illustrated, and not all the control lines and the information lines in mounting are necessarily shown. In practice, it may be considered that almost all components are connected to each other.

**Claims**

1. An image processing device comprising:

   an image acquisition unit that acquires a plurality of images captured by each of a plurality of cameras;
   a first distance estimation unit that estimates a distance to an object using the plurality of images;
   a second distance estimation unit that estimates the distance to the object using at least one of the plurality of images;
   an image-capturing-time computation unit that obtains image-capturing times of at least some pixels included in the plurality of images;
   a reliability computation unit that obtains reliability of the plurality of images based on a difference between image-capturing times of the pixel in the plurality of images; and
   a distance determination unit that determines a distance to the object by using the distance estimated by at least one of the first distance estimation unit and the second distance estimation unit and the reliability.

2. The image processing device according to claim 1, wherein

   the first distance estimation unit estimates the distance to the object from parallax of an image captured by each of two cameras among the plurality of cameras, and
   the second distance estimation unit estimates the distance to the object using an image captured by one of the plurality of cameras.

3. The image processing device according to claim 1, wherein

   the image acquisition unit acquires an image captured by each of at least three cameras,
   the first distance estimation unit estimates a distance to the object from parallax of images captured by two cameras among the plurality of cameras, and
   the second distance estimation unit estimates the distance to the object from parallax of images captured by two cameras in combination different from the cameras that captured the images used by at least the first distance estimation unit to estimate the distance.

4. The image processing device according to claim 1, further comprising a feature point extraction unit that extracts a feature point from the plurality of images,
   wherein the image-capturing-time computation unit obtains an image-capturing time of the feature point based on a position of the extracted feature point on the image.

5. The image processing device according to claim 4, wherein the reliability computation unit obtains the reliability based on a difference between the image-capturing times of the feature point in the plurality of images.

6. The image processing device according to claim 5, wherein the reliability computation unit obtains reliability of at least one of a set of the plurality of images, a set of regions in the plurality of images, and a set of the feature points based on the difference between the image-capturing times of the feature point on the plurality of images.

7. The image processing device according to claim 1, wherein the reliability computation unit obtains reliability of a set of regions where the object exists in the plurality of images.

8. The image processing device according to claim 1, wherein the distance determination unit selects any one of a result of estimation of a distance by the first distance estimation unit and a result of estimation of a distance by the second distance estimation unit as the distance to the object based on the reliability.

9. An image processing method executed by an image processing device including a computation device that executes predetermined processing and a storage device that is able to be accessed by the computation device, the image processing method comprising:

an image acquisition procedure of acquiring a plurality of images captured by each of a plurality of cameras;
a first distance estimation procedure of estimating a distance to an object using the plurality of images;
a second distance estimation procedure of estimating the distance to the object using at least one of the plurality of images;
an image-capturing-time computation procedure of obtaining image-capturing times of at least some pixels included in the plurality of images;
a reliability computation procedure of obtaining reliability of the plurality of images based on a difference between image-capturing times of the pixel in the plurality of images; and
a distance determination procedure of determining the distance to the object using the distance estimated in at least one of the first distance estimation procedure and the second distance estimation procedure and the reliability.

[FIG. 1]

[FIG. 2]

```
                    ┌─────────────┐
                    │    start    │
                    └─────────────┘
                           │
                           ▼
S201 ┌──────────────────────────────────────┐
     │      ACQUIRE PLURALITY OF IMAGES      │
     └──────────────────────────────────────┘
                           │
                           ▼
S202 ┌──────────────────────────────────────┐
     │          EXTRACT FEATURE POINT        │
     └──────────────────────────────────────┘
                           │
                           ▼
S203 ┌──────────────────────────────────────┐
     │         MATCH FEATURE POINTS          │
     │           BETWEEN IMAGES              │
     └──────────────────────────────────────┘
                           │
                           ▼
S204 ┌──────────────────────────────────────┐
     │   CALCULATE IMAGE CAPTURING TIME      │
     │       AT EACH FEATURE POINT           │
     └──────────────────────────────────────┘
                           │
                           ▼
S205 ┌──────────────────────────────────────┐
     │          CALCULATE RELIABILITY        │
     └──────────────────────────────────────┘
                           │
                           ▼
           ╱────────────────────────────╲
S206      ╱        IS RELIABILITY         ╲
         ╱     EQUAL TO OR MORE THAN        ╲─────── No ───────┐
         ╲        THRESHOLD VALUE?          ╱                  │
          ╲────────────────────────────────╱                  │
                     │ Yes                                     │
                     ▼                                    S208 │
S207 ┌────────────────────────────┐   ┌──────────────────────────────────┐
     │   OUTPUT DISTANCE VALUE OF  │   │    OUTPUT DISTANCE VALUE OF       │
     │  FIRST DISTANCE ESTIMATION  │   │ SECOND DISTANCE ESTIMATION UNIT   │
     │           UNIT             │   └──────────────────────────────────┘
     └────────────────────────────┘                │
                     │◄──────────────────────────────┘
                     ▼
             ┌─────────────┐
             │     end     │
             └─────────────┘
```

[FIG. 3]

[FIG. 4]

```
                    ┌──────────┐
                    │  start   │
                    └──────────┘
                          │
                          ▼
S401   ┌─────────────────────────────────────┐
       │     ACQUIRE PLURALITY OF IMAGES      │
       └─────────────────────────────────────┘
                          │
                          ▼
S402   ┌─────────────────────────────────────┐
       │        EXTRACT FEATURE POINT         │
       └─────────────────────────────────────┘
                          │
                          ▼
S403   ┌─────────────────────────────────────┐
       │        MATCH FEATURE POINTS          │
       │          BETWEEN IMAGES              │
       └─────────────────────────────────────┘
                          │
                          ▼
S404   ┌─────────────────────────────────────┐
       │  CALCULATE IMAGE CAPTURING TIME      │
       │      AT EACH FEATURE POINT           │
       └─────────────────────────────────────┘
                          │
                          ▼
S405   ┌─────────────────────────────────────┐
       │     CALCULATE RELIABILITY FOR        │
       │       EACH SET OF CAMERAS            │
       └─────────────────────────────────────┘
                          │
                          ▼
S406         RELIABILITY 1 ≥ RELIABILITY 2?  ──── No ──────────────┐
                          │                                        │
                         Yes                                       │
                          ▼                                        ▼
S407   ┌───────────────────────────────┐   S408  ┌───────────────────────────────────┐
       │   OUTPUT DISTANCE VALUE OF     │         │    OUTPUT DISTANCE VALUE OF        │
       │ FIRST DISTANCE ESTIMATION UNIT │         │ SECOND DISTANCE ESTIMATION UNIT    │
       └───────────────────────────────┘         └───────────────────────────────────┘
                          │                                        │
                          ▼◄───────────────────────────────────────┘
                    ┌──────────┐
                    │   end    │
                    └──────────┘
```

## INTERNATIONAL SEARCH REPORT

| International application No. |
| --- |
| **PCT/JP2023/033714** |

**A.    CLASSIFICATION OF SUBJECT MATTER**

*G01C 3/06*(2006.01)i; *G06T 7/593*(2017.01)i; *H04N 23/60*(2023.01)i
FI:    G06T7/593; H04N23/60; G01C3/06 110V

According to International Patent Classification (IPC) or to both national classification and IPC

**B.    FIELDS SEARCHED**

Minimum documentation searched (classification system followed by classification symbols)

G01C3/06; G06T7/593; H04N23/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2021-51347 A (ISUZU MOTORS LTD.) 01 April 2021 (2021-04-01) paragraphs [0014]-[0045], fig. 1-3 | 1-9 |
| A | JP 2013-186043 A (HITACHI AUTOMOTIVE SYSTEMS, LTD.) 19 September 2013 (2013-09-19) paragraphs [0023]-[0043], fig. 1-4 | 1-9 |

☐ Further documents are listed in the continuation of Box C.    ☑ See patent family annex.

| | | |
| --- | --- | --- |
| *      Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "E"    earlier application or patent but published on or after the international filing date | "X" | document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | | |
| "P"    document published prior to the international filing date but later than the priority date claimed | "&" | document member of the same patent family |

| Date of the actual completion of the international search | Date of mailing of the international search report |
| --- | --- |
| **22 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/033714**

| Patent document cited in search report | | | Publication date (day/month/year) | Patent family member(s) | Publication date (day/month/year) |
|---|---|---|---|---|---|
| JP | 2021-51347 | A | 01 April 2021 | (Family: none) | |
| JP | 2013-186043 | A | 19 September 2013 | US 2015/0036886 A1 paragraphs [0030]-[0049], fig. 1-4 WO 2013/132947 A1 EP 2824417 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022201532 A

- JP 2019062255 A